# EUROPEAN PATENT SPECIFICATION

(11) **EP 1 903 885 B1**
(45) Date of publication and mention of the grant of the patent: **09.03.2011**
(21) Application number: 06762311.6
(22) Date of filing: 30.06.2006
(51) Int. Cl.: A23F 5/24, A23F 5/42, A23C 11/00

(54) **METHODS AND SYSTEMS TO ENHANCE FOAM GENERATION AND QUALITY THROUGH DISPENSER**
VERFAHREN UND SYSTEME ZUR VERBESSERUNG DER SCHAUMERZEUGUNG UND QUALITÄT DURCH ABGABEVORRICHTUNGEN
PROCEDES ET SYSTEME POUR AMELIORER LA GENERATION ET LA QUALITE DE MOUSSE AU MOYEN D'UN DISTRIBUTEUR TRAVERSANT

(30) Priority: 11.07.2005 US 178873
(43) Date of publication of application: 02.04.2008
(73) Proprietor: Nestec S.A., 1800 Vevey (CH)
(72) Inventor: SHER, Alexander, A., Dublin, OH 43017 (US); GRAY, Jonathan, A., Mundelein, IL 60060 (US); LIVINGS, Simon, CH-1073 Savigny (CH); THAKUR, Beli, New Milford, CT 06776 (US); WEDRAL, Elaine, Regina, Sherman, CT 06784 (US)
(74) Representative: Ducreux, Marie
(86) International application number: PCT/EP2006/006377
(87) International publication number: WO 2007/006432

(56) References cited:
- WO-A-97/18720
- WO-A-2004/049834
- WO-A-2005/122799
- WO-A2-2005/028610
- US-A- 4 903 585
- US-B1- 6 207 203

## Description

### BACKGROUND OF THE INVENTION

The present invention relates generally to beverages. More specifically, the present invention relates to methods for producing an improved quality foam in a beverage.

Beverages having foam are well known products. Foamed beverages include, for example, coffee beverages such as cappuccinos. These products may typically comprise dry mixes or solutions of a soluble coffee powder and a soluble whitener powder or liquid creamer.

The soluble whirener powder may be a protein-based food product, for example, containing milk or the like. The soluble whitener powder contains pockets of gas that produce foam upon dissolution of the powder when mixed with water. Mixing this soluble whitener powder with a coffee product in liquid, for example, forms a whitened coffee beverage that has foam on its upper surface.

Consumers drinking foamed beverages enjoy the additional aesthetic and taste characteristics that accompany the beverages having a foamed topping. Usually for dispensed foamed/frothed beverages, e.g. cappuccino type, a quality foam needs to be generated in a very short period of time and should be stable during a reasonable period of time so the consumer can enjoy the foam while drinking the beverage. Nevertheless, the typical quality and stability of the foam arising from current soluble whitener powders or liquid creamers is poor. Further, the bubble size distribution is often very inhomogeneous, and the foam texture is poor, soapy and not stiff enough. The foam typically dissipates too quickly and lasts too short of a period of time for consumers to enjoy.

It is therefore desirable to improve the foam quality of food products such as beverages having foam.
US 6,207,203 describes a method to prepare a low fat vitamin and mineral fortified coffee. The minerals are provided by adding different mineral components including calcium in a dry blend of coffee and milk powder and then whipping the dry blend with hot water.
WO 2004/049834 describes the preparation of an Irish coffee beverage by adding calcium stearoyl lactylate to water, then adding skim milk powder and creamer, and mixing.

### SUMMARY OF THE INVENTION

The present invention generally relates to improved foam products and methods for producing same. In first embodiment, the inventions relates to a method for generating an improved quality foam for a beverage, as described in claim 1 , whereby a beverage product is mixed, whipped, aerated or sheared, and foam is generated having a heightened volume and improved texture.

In a second embodiment, a system as described in claim 5 is provided, comprising a powdered protein source to which a multivalent ion source such as calcium salt is added at the point of mixing/aeration. The mixture is designed to be reconstituted with a liquid such as hot water. The powdered protein source and multivalent ion source is a dry blend. The system can serve to improve the foam of foaming product from a dispensing machine or from a consumer stirring to foam the foaming product.

According to the invention, the method comprises combining a calcium ion source and a protein source, adding them during reconstitution and aerating with a diluent (e.g. water), for example, by whipping to form the final foamed liquid beverage product.

The method comprises dispensing the foaming source and the multivalent ion source simultaneously into the liquid source into the liquid source during aeration.

In an embodiment, the aerating is selected from the group consisting of agitating, whipping, stirring, shearing, gas sparging, gas production by chemical/biochemical reaction, gas release ultrasonic treatment, etc. and combinations thereof.

In an embodiment, the mixing requires less than 1 minute to produce the improved quality foam.

In an embodiment, the mixing requires less than 10 seconds to product the improved quality foam.

In an embodiment, the foam is stable for more than 1 hour after the mixing.

In an embodiment, the foam is stable for more than 24 hours after the mixing.

The foaming source is selected from the group consisting of one or more one powdered protein sources or from the group consisting of dairy and non-dairy proteins (e.g. sodium caseinate), demineralized whey protein isolate product, a low mineralized whey protein isolate product and combinations thereof.

The calcium ion is selected from the group consisting of calcium chloride, calcium bromide, calcium lactate, calcium nitrate, calcium bicarbonate, calcium acetate, calcium ascorbate, and combinations thereof.

In an embodiment, the multivalent ion source has a concentration ranging from about 1 mM to 20 mM.

In an embodiment, the multivalent ion source has a concentration ranging from about 2.7 mM to 10 mM.
According to the invention the foaming source and the multivalent ion source are stored as a dry mix together prior to combining with the liquid source.
According to the invention, the method comprises: providing a dry mix including at least one foaming source and at least one multivalent ion source; providing a liquid source separate from the dry mix; dispensing the dry mix at the same time with the liquid source as mixing/aerating, for example by whipping or shearing, to produce the stable foam.

In an embodiment, the liquid source is a coffee-based product.

An advantage of the present invention is an increase in beverage foam quality such as volume, stability and texture, of foam-containing products (e.g. cappuccino type liquid beverages) from a dispenser.

Another advantage of the present invention is to provide a beverage foam that improves the organoleptic qualities of the liquid portion of the beverage for consumers.

Still another advantage of the present invention is to provide additional nutritional values to a beverage.

Yet another advantage of the present invention is to allow a consumer or operator to customize or control the foam amount, texture and bubble size distribution of a beverage.

Another advantage of the present invention is to provide a beverage with foam properties according to a consumers preferences.

Still another advantage of the present invention is enable a beverage producer to provide high quality beverages for sale to consumers.

Yet another advantage of the present invention is to provide a dispensing system for closed powder/liquid from capsules or bulk products.

Another advantage of the present invention is to create a liquid beverage with high quality foam in a very short period of time.

Additional features and advantages of the present invention are described in, and will be apparent from, the following Detailed Description and the figures.

### BRIEF DESCRIPTION OF THE FIGURES

Fig. 1A is a graph illustrating the effect of calcium concentration (calcium lactate) on foam-to-liquid ratio (FLR).

Fig. 1B is a graph illustrating the effect of calcium concentration (calcium lactate) on stiffness of foams from de-mineralized whey protein isolate depending on if the calcium was added with the powder or with the water.

Fig. 2 is a graph illustrating the effect of calcium ion concentration (CaCl₂) on FLR of foams from de-mineralized whey protein isolate when calcium was added to the powder.

Fig. 3 is a graph illustrating the effect of calcium ion concentration (CaCl₂) on stiffness of foams from a commercial demineralized whey protein isolate when calcium was added to the powder.

Fig. 4 is a graph illustrating the effect of calcium ion concentration (CaCl₂) on stiffness of whipped, commercial skim milk powder beverages when calcium was added to the powder.

Fig. 5 is a graph illustrating the effect of the addition of a mixture of CaCl₂/de-mineralized WPI on stiffness of whipped, commercial skim milk beverages when calcium was added to the powder.

Fig. 6 is a graph illustrating the effect of calcium ion concentration (CaCl₂) on viscosity of cappuccino beverages prepared from a capsule when calcium was added to the powder.

Fig. 7 is a graph illustrating the effect of calcium ion concentration (calcium lactate) on FLR of whipped de-mineralized WPI beverages when calcium was added to the powder.

Fig. 8 is a graph illustrating the effect of calcium ion concentration (calcium lactate) on FLR of whipped whey protein concentrate beverages when calcium was added to the powder.

Fig. 9A is a graph illustrating the effect of calcium ion concentration (calcium lactate) on FLR.

Fig. 9B is a graph illustrating the effect of calcium ion concentration (calcium lactate) on stiffness of whipped sodium caseinate beverages when calcium was added to the powder.

### DETAILED DESCRIPTION OF THE INVENTION

The present invention relates to protein-cation based methods and systems that produce a foam of an improved quality, increased volume and improved texture upon agitation, mixing, aerating or shearing. The method generally comprises preparing a dry mixture or solution of a multivalent cation source and protein source, reconstituting with a diluent or solution (e.g., water, flavored beverage) at the point (moment) of aerating (e.g. during whipping or shearing) to form the final foamed product having an improved quality foam such as stability and mouthfeel. It is important that calcium ion source be chemically separated from both protein and reconstituting liquid (water) sources. The multivalent cation source can be calcium ions, magnesium ions source or any suitable multivalent cations. The reconstituting solution can be any liquid in which foam is desired, or other food products (e.g. powdered coffee) can be added to or with the reconstituting solution to produce a desired beverage. The final foamed product can be a commonly consumed beverage such as hot chocolate, coffee, cappuccino, latte, macchiatto or other similar types of beverages.

The liquid source may comprise, for example, any suitable source of drinking water such as deionized water, distilled water, softened and hard water, and/or combination of thereof.

It was surprisingly found that addition of a cation source with milk protein powders at the point of aerating, significantly improved foam quality through a dispenser. Specifically, in studies, reconstitution of the milk protein powders using water already containing the same cation concentration practically did not change foam quality as compared to a control foam without added cation.

The cation source is chemically separate from the protein source either by staying dry in a blend or mixture with the dry protein source or according to an embodiment that is not part of the invention by being stored separately from the protein source if the cation or protein sources are already in a liquid form (i.e. liquid concentrate).

A preferred composition is a powdered protein source to which a calcium salt is added resulting in a powder mix that can be stored. Another approach that is not part of the present invention is to use a separately-kept-powder and/or a liquid cation source and add it-to-the-reconstitution solution simultaneously with the protein source in powder and/or liquid forms at the point of aeration through a dispenser. Once reconstituted with hot water at the point of aerating (e.g. by mixing, shearing, agitating, gas sparging, ultrasonic treatment, etc.), the foam volume and/or quality is of improved quality over ordinary foams.

To improve foam quality, for example, cation source alone, whey or other proteins alone, and/or dry combinations thereof could be added to milk base or non-dairy powders. It has been found that the use of a de-mineralized or low mineral whey protein isolate product plus highly water-soluble calcium salt is particularly effective. The most effective are multivalent cations, especially calcium and magnesium, from a variety of sources such as various organic and inorganic salts, oxides, hydroxides, coordinative compounds or mixtures thereof.

The present methods and compositions can be used in any suitable dispensing system such as a mixing or dispensing apparatus. For example, the dispensing apparatus can be part of a dispensing system using closed powder/liquid from capsules or bulk products. Alternatively, consumers can personally mix the multivalent cation and protein components in accordance with the present embodiments to arrive at the improved foam beverage. The methods and composition can also be advantageous for powder milk systems where added calcium or other cations will not be detrimental during storage, unlike for liquids.

Foam characteristics can be controlled by the amount of calcium added or released during processing, mixing or dispensing. For example, at pre-determined levels of cations, unique foam textures can be produced depending on the amount of cation addition. However, high levels of cations may provide undesirable foam texture (i.e. clumpy or with lumps).

One of the best sources of multivalent cation is calcium. Added calcium is also advantageous for nutritional purposes where supplementation or enrichment of the mineral (e.g. calcium or magnesium) is desired, and the method is also applicable for low-shear or whipper-less systems. If liquid systems are preferred, then calcium or other cation addition can be directed through other product streams and mixed together simultaneously at the time the liquid is dispensed or poured.

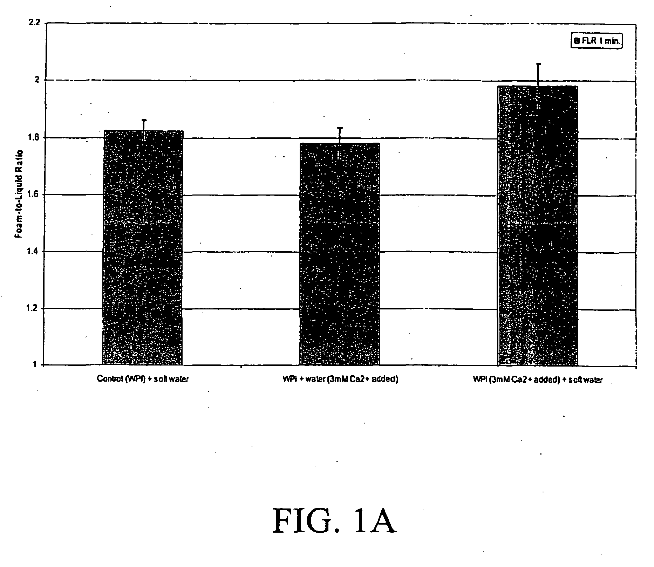

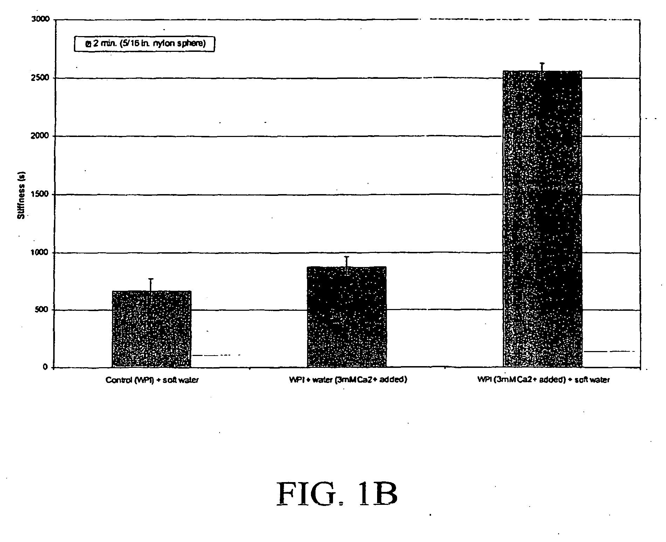

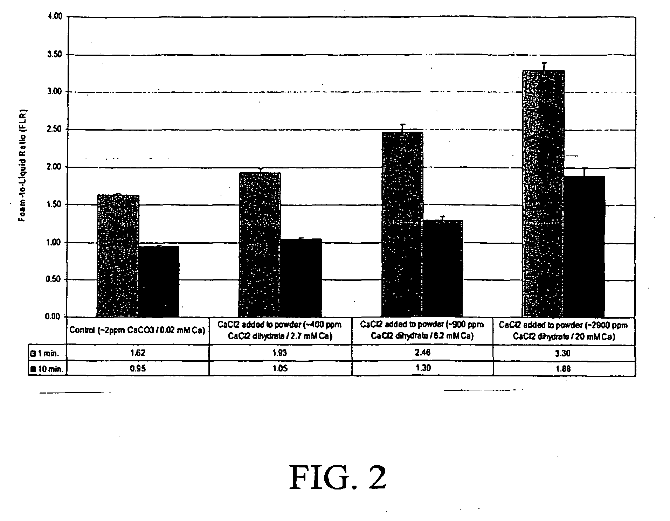

By way of example and not limitation, foam improvements for various systems are discussed below in accordance with Figs. 1-9. Fig. 1 shows the effect of calcium concentration (calcium lactate) on (A) foam-to-liquid ratio ("FLR") and (B) stiffness of foams from de-mineralized whey protein isolate ("WPI") depending on if the calcium was added with the powder or with the water. In Fig. 2, calcium was added in the form of calcium chloride (CaCl₂) powder to a commercial, de-mineralized whey protein isolate powder (<0.05% Ca²⁺) at different concentrations and dispensed through a whipper dispensing system at 85° C. The final in-cup calcium concentrations were reported. Foam-to-liquid ratios (FLR) measured at 1 and 10 minutes after dispensing were increased in the presence of calcium ions, Ca²⁺.

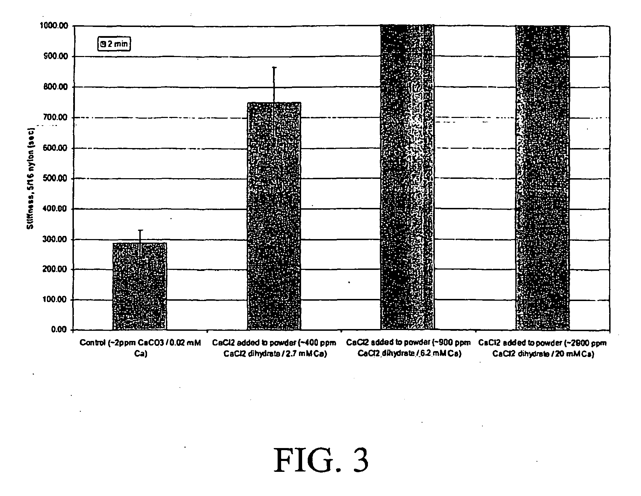

Fig. 3 reports the effect of dry CaCl₂ addition to a commercial, de-mineralized whey protein isolate on foam stiffness. The foam stiffness was measured by the 5/16-in. nylon sphere method at 2 minutes after dispensing. As shown in Fig. 3, stiffness was greatly affected by the calcium addition. In fact, in two samples with 6.2 and 20 mM of calcium ions, the nylon sphere failed to penetrate the top foam layer even after sitting overnight. Sensory evaluation was made by a panel of 5 people. As the calcium concentration increased, so did the number of small bubbles and stiffness characteristics of the foam. At high calcium concentration levels, the foam contained fine bubbles and resembled a shaving cream in appearance.

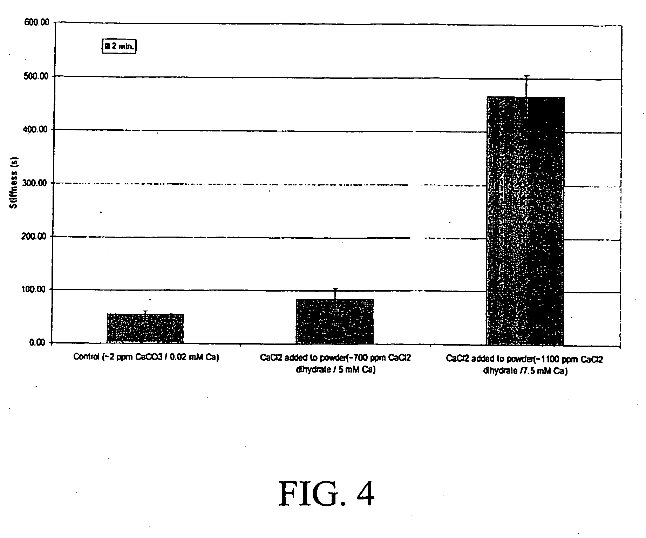

In another case, adding CaCl₂ powder to a commercial skim milk powder resulted in only a slight increase in initial foam volume, but the foam texture was improved dramatically. The stiffness measurements are shown in Fig. 4. Thus, the de-mineralized WPI/Ca²⁺ source system could be used in foam generation through a dispenser.

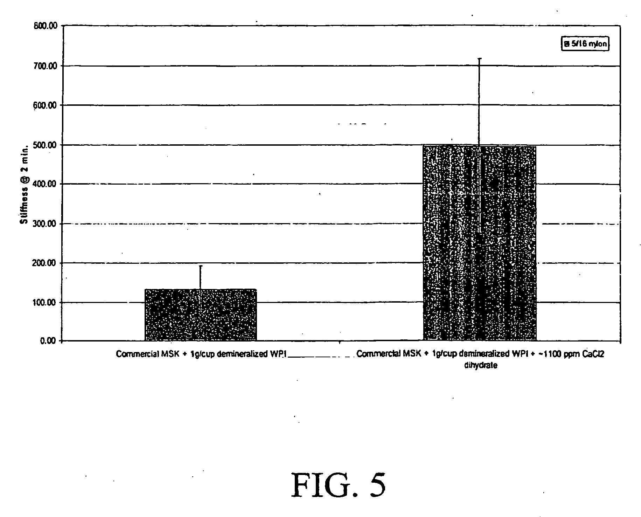

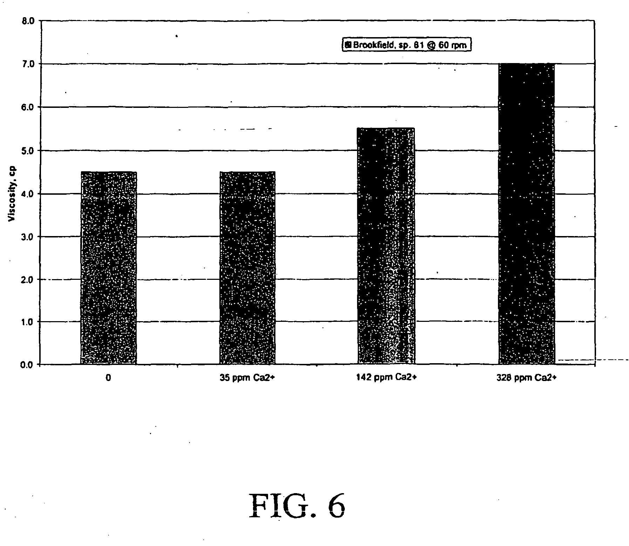

When a 10% mixture (1 g WPI + ∼1100 ppm CaCl₂) of CaCl₂ powder and the de-mineralized whey protein isolate powder were added to the commercial skim milk powder (MSK), a significant increase in stiffness was also found as shown in Fig. 5. Beverage mouthfeel was also improved in correlation with an increase in liquid viscosity as shown in Fig. 6. Calcium chloride powder was also tested using a beverage capsule, and improvements were similar to those described above.

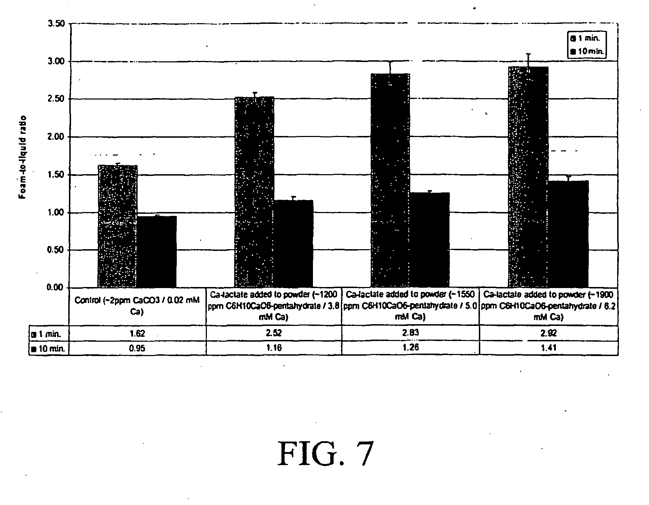

To display the effectiveness of other calcium salts, calcium lactate was added at various concentrations to a commercial, de-mineralized whey protein isolate powder. As shown in Fig. 7, improvements were observed that were similar those observed for calcium chloride. Stiffness was also enhanced with calcium lactate as the nylon sphere failed to penetrate the calcium lactate samples.

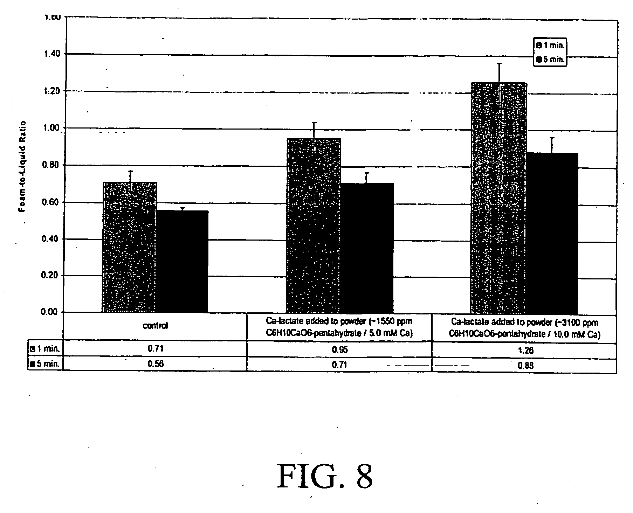

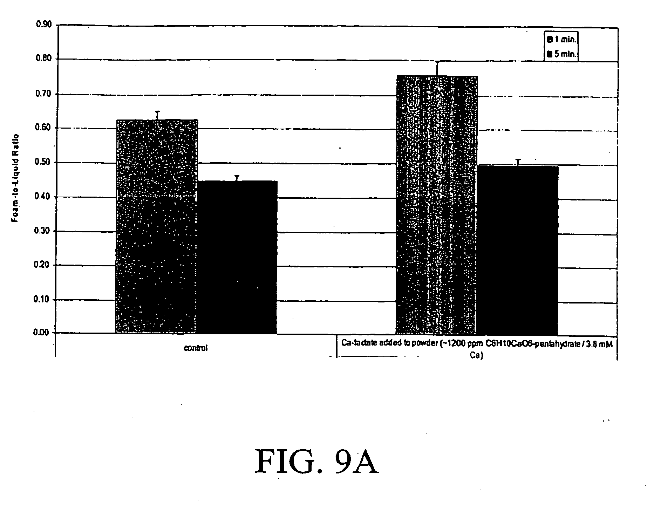

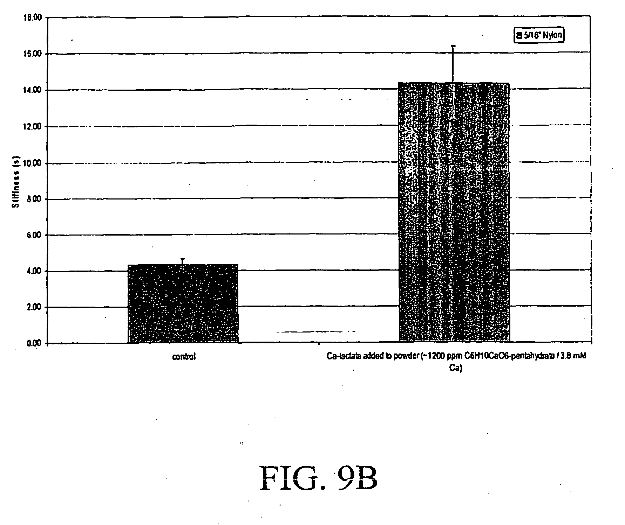

Calcium lactate was also added to other commercial powdered protein systems. As an example, results for whey protein concentrate (with ∼0.3% Ca²⁺) and sodium caseinate (with ∼0.3% Ca²⁺) are shown in Figs. 8 and 9. In both cases, added calcium resulted in significant increases in FLR. Stiffness for whey protein concentrate and sodium casseinate (Fig. 9) was significantly increased with increasing concentrations of calcium lactate. Sensory evaluation by a panel of 5 people of foamed beverages also showed significant improvements in foam quality in such characteristics as volume, stability, mouthfeel and texture.

In an embodiment that is not part of the invention, the method comprises providing at least one foaming source; providing at least one multivalent ion source; providing a liquid source separate from the multivalent ion source; combining the foaming source, the multivalent ion source and the liquid source at the point of aerating to produce the improved quality foam. The aerating can be done, for example, by mixing, agitating, whipping, shearing, stirring, gas sparging, ultrasonic treatment or any suitable aerating/mixing method. In an embodiment, the mixing takes place simultaneously with the combining of the foaming source, the multivalent ion source and the liquid source or immediately thereafter.

In an embodiment, the system comprises at least one dry protein source; at least one dry multivalent ion source combined with the protein source to form a dry blend; and a reconstituting liquid, wherein mixing/aerating the dry blend and the reconstituting liquid generates the improved quality foam.

In an embodiment that is not part of the invention, the system comprises at least one dry protein source; at least one dry multivalent ion source stored separately from the protein source; and a reconstituting liquid, wherein mixing/aerating the protein source, the multivalent ion source and the reconstituting liquid at the point of aerating generates the improved quality foam.

In an embodiment that is not part of the invention, the system comprises at least one concentrated liquid protein source; at least one multivalent ion source stored separately from the liquid protein source; and a reconstituting liquid, wherein mixing/aerating the liquid protein source, the multivalent ion source and the reconstituting liquid at the point of aerating generates the improved quality foam. The multivalent ion source can be a dry or concentrated liquid cation source.

the foaming source and the multivalent ion source is dispensed simultaneously into or with the liquid source. The dispensing can be done by any suitable dispenser. The dispenser can refer to a dispensing machine such as, for example, a coffee or cappuccino maker or can refer to a consumer stirring or combining the foaming source and multivalent ion source with a reconstituting liquid at the point of aerating by any suitable manner.

In an embodiment, the dry protein source and dry cation source can be stored together as a dry blend prior to being reconstituted. In an alternative embodiment that is not part of the present invention, the dry protein source and the dry cation source can be separately stored in two separate container or packages prior to being reconstituted. In another embodiment, that is not part of the present invention a liquid protein concentrate and the dry or concentrated liquid cation source can be separately stored prior to being reconstituted. The protein concentrate can be, for example, a milk-based product such as a creamer.

In an embodiment, the method can serve to improve the foaming of beverages in a dispensing machine. In another embodiment, the method can serve to improve the foam quality of a food/beverage made by a consumer by adding a dry foaming source and a dry multivalent ion source or a blend of the sources to water (also water could be added to powder(s)) and stirring simultaneously to form the foamed liquid beverage product (e.g. retail applications).

The multivalent ion source should be water soluble so that the multivalent ions are dissociated when mixed with the diluent or reconstituting solution. Preferably, the multivalent ion source is calcium ions. Water soluble source of calcium are, for instance, calcium chloride, calcium lactate or nitrate. Other compounds such as calcium phosphate or sulfate, typically used in creamers, may not work because they do not provide free calcium ions.

The multivalent ion source can be in the form of a highly concentrated solution, meaning a solution saturated in the multivalent ion source. Preferably, a dry source of the multivalent ion is used at the time of reconstitution.

It should be appreciated that in all of the embodiments any suitable aerating techniques such as mixing, shearing, gas sparging, Venturi, ultrasound or agitating can be used. For example, the mixing or shearing may require less than 1 minute to produce the improved quality foam. Preferably, the mixing or shearing requires less than 0.2 minutes to produce the improved quality foam.

The foam stability of the present embodiments may last a long time after the mixing is finished. The foam stability refers to the ability of the foam to maintain a certain percentage of its original volume and texture over time. For example, a stable foam may retain its 80% of its original volume and texture over time. Preferably, the improved foam is stable for more than 20 minutes after the mixing/aerating is complete. More preferably, the improved foam is stable for more than 24 hours after the mixing/aerating is complete.

In an embodiment, the foaming source may comprise one or more powdered protein sources. In an embodiment, the foaming source may comprise dairy or non-dairy proteins (e.g. sodium caseinate), demineralized whey protein isolate products, low mineralized whey protein isolate products or combinations thereof. In an embodiment, the calcium ion may comprise calcium chloride, calcium bromide, calcium lactate, calcium nitrate, calcium bicarbonate, calcium acetate, calcium ascorbate, or combinations thereof.

It should be appreciated that any suitable amount of the multivalent ion source may be used in the present embodiments. Preferably, the maximum amount of multivalent cation, such as calcium, added should not exceed 800 ppm (10 mM) in the final solution. Most preferably the amount should range of from 80 ppm to 400 ppm. Generally, if the calcium concentration is higher, it produces lumps in the product. Nevertheless, any suitable concentration of the multivalent ion source in the final product may be used. Preferably, the multivalent ion source has a concentration ranging from about 1 mM to 20 mM. More preferably, the multivalent ion source has a concentration ranging from about 2.7 mM to 10 mM.

EXAMPLES

By way of example and not limitation, the following examples are illustrative of various embodiments of the present invention and further illustrate experimental testing conducted in accordance with embodiments of the present invention.

COMPARATIVE EXAMPLE 1

A cappuccino type beverage was prepared using a conventional dispenser (Bravilor Bonomat -20) by dissolving 7 g of de-mineralized whey protein isolate powder in 150 g of de-ionized water. The beverage was dispensed at normal operation conditions using 85 °C.

The beverage obtained had a homogeneous liquid phase and high foam-to-liquid ratio (FLR = ∼1.6 measured at 1 min after dispensing). Further, the foam was stable and stiff, and with desirable appearance comprising uniformly distributed small bubbles. Foam stiffness expressed in seconds (measured by the "sphere" test using a 5/16-in nylon ball at 2 min after dispensing) was ∼700 s. Viscosity of liquid part of the beverage was 1.3 cP.

Foam and liquid mouthfeel were judged by a taste panel of 5 people. The foam and liquid mouthfeel/texture was found to be acceptable.

EXAMPLE 2 not according to the present invention

A cappuccino beverage was prepared under conditions provided by Example 1 but using water with added calcium lactate pentahydrate. Calcium concentration in the final beverage was 150 ppm.

The beverage with a homogeneous liquid phase, high foam-to-liquid ratio, and with a uniform distribution of small bubbles was obtained. Foam properties were found to be very similar to that from Example 1.

Foam and liquid organoleptic properties or mouthfeel were judged by a taste panel of 5 people. The foam and liquid mouthfeel/texture was found to be similar to those from Example 1.

EXAMPLE 3 according to the present invention

A cappuccino beverage was prepared under conditions provided by Example 1 but using de-mineralized whey protein isolate powder with added calcium lactate, pentahydrate. Calcium concentration in the final beverage was 150 ppm.

The beverage obtained had a homogeneous liquid phase and very high foam-to-liquid ratio. Further, the foam was stable and stiff, and with desirable appearance comprising uniformly distributed small bubbles.

Foam and liquid mouthfeel were judged by a taste panel of 5 people. The foam and liquid mouthfeel/texture was found to be improved as compared to those from Example 1.

The improvements in foam and liquid mouthfeel as compared to the examples above were also confirmed by analytical characterization. Thus, foam-to-liquid ratio increased from ∼1.6 to ∼2.0, and foam stiffness from ∼ 700 s to ∼2500 s as compared to Example 1 and Example 2. In addition, mouthfeel of the liquid part of the beverage was improved as compared to that from Example 1. This was found to be in a good correlation with viscosity data, 2.5 vs. 1.3 cP.

EXAMPLE 4 according to the present invention

A cappuccino beverage was prepared under conditions provided by Example 1 but using de-mineralized whey protein isolate powder with added calcium chloride. Calcium concentration in the final beverage was 150 ppm.

The beverage obtained had a homogeneous liquid phase and very high foam-to-liquid ratio. Further, the foam was stable and stiff, and with desirable appearance comprising uniformly distributed small bubbles. Foam properties were very close to that of Example 3.

Sensory evaluation of foam was made by a taste panel of 5 people. The foam mouthfeel/texture was found to be acceptable.

EXAMPLE 5 according to the present invention

A cappuccino beverage was prepared under conditions provided by Example 1 but using de-mineralized whey protein isolate powder with added calcium chloride. Calcium concentration in the final beverage was 800 ppm.

The beverage with a homogeneous liquid phase and very high foam-to-liquid ratio and stiff foam were observed., i.e. FLR = ∼3.4, and stiffness ∼ more than 50,000 sec. Thus, physical properties of the foam were significantly improved as compared to Example 4.

Sensory evaluation was made by a panel of 5 people. Foam mouthfeel was undesirable (lumpy).

EXAMPLE 6 according to the present invention

A cappuccino type beverage was prepared using a conventional single-serve dispenser (Allora). Capsule contained a mixture of de-mineralized whey protein isolate powder and calcium chloride. The beverage was dispensed at normal operation conditions using 85 °C. Calcium concentration in the final beverage was 150 ppm.

Foam quality was similar to that prepared by using a mechanical whipper (Bravilor-Bonomat).

COMPARATIVE EXAMPLE 7

A cappuccino beverage was prepared under conditions provided by Example 1 but using mixture of commercial skim milk (90%) and whey protein isolate (10%) powders.

The beverage with a homogeneous liquid phase, high foam-to-liquid ratio, and with a uniform distribution of small bubbles was obtained. Foam stiffness was ∼120 s.

EXAMPLE 8 according to the present invention

A cappuccino beverage was prepared under conditions provided by Example 7 but using mixture of commercial skim milk powder (∼90%), whey protein isolate (∼10%) but with added calcium chloride. Calcium concentration in the final beverage was 150 ppm.

The beverage with a homogeneous liquid phase, very high foam-to-liquid ratio, and with a uniform distribution of small bubbles was observed. Foam stiffness was significantly improved as compared to that from Example 7, i.e. 500 vs. 120 s.

In accordance with various embodiments of the present invention, more stable and stiffer foams with more uniform bubble size distributions were generated in samples with added calcium lactate (varying up to 20 mM as calcium ions). No change in foam taste (especially bitterness) was detected even for very high levels of calcium lactate.

It should be understood that various changes and modifications to the presently preferred embodiments described herein will be apparent to those skilled in the art. Such changes and modifications can be made without departing from the spirit and scope of the present invention and without diminishing its intended advantages. It is therefore intended that such changes and modifications be covered by the appended claims.

## Claims

1. Method for generating an improved quality foam for a beverage, the method comprising :
- providing at least one foaming source selected from powdered protein sources or from the group consisting of dairy proteins, non-dairy proteins, demineralized whey protein isolate products, low mineralized whey protein isolate products and combinations thereof ;
- providing a multivalent ion source ;
- providing a liquid source separate from the multivalent ion source ;
- combining the foaming source, the multivalent ion source and the liquid source and aerating to produce foam.
**characterized in that**:
- the multivalent ion source is at least one water soluble multivalent ion source selected from the group consisting of calcium chloride, calcium bromide, calcium lactate, calcium nitrate, calcium acetate, calcium ascorbate and combinations thereof, and
- the foaming source and the water soluble multivalent ion source are stored as a dry mix together prior to combining with the liquid source.

2. The method of Claim 1 comprising dispensing the foaming source and the multivalent ion source simultaneously into the liquid source during aeration.

3. The method of Claim 1, wherein the aerating is selected from the group consisting of agitating, mixing, whipping, stirring, shearing, gas sparging, gas production by chemical/biochemical reaction, gas release ultrasonic treatment and combinations thereof.

4. The method of Claim 3, wherein the aerating takes place simultaneously with the combining of the foaming sources, the multivalent ion source and the liquid source.

5. A system for generating an improved quality foam for a beverage, the system comprising :
- at least one dry protein source;
- at least one multivalent ion source combined with the protein source to form a dry blend ; and
- a reconstituting liquid,
wherein simultaneously aerating the dry blend and the reconstituting liquid generates a liquid beverage having the improved quality foam
**characterized in that** the multivalent ion source is a dry water soluble multivalent ion source selected in the group of calcium chloride, calcium bromide, calcium lactate, calcium nitrate, calcium acetate, calcium ascorbate and combinations thereof

## Patentansprüche

1. Verfahren zur Erzeugung eines Schaums mit verbesserter Qualität für ein Getränk, mit folgenden Schritten:
- Bereitstellen von mindestens einer Schäumungsquelle, welche aus pulverisierten Proteinquellen oder aus der Gruppe von Milchproteinen, milchfreien Proteinen, entmineralisierten Produkten aus isoliertem Molkeprotein, wenig mineralisierten Produkten aus isoliertem Molkeprotein sowie Kombinationen aus diesen ausgewählt wird;
- Bereitstellen einer multivalenten Ionenquelle;
- Bereitstellen einer Flüssigkeitsquelle, die von der multivalenten Ionenquelle getrennt ist;
- Kombinieren der Schäumungsquelle, der multivalenten Ionenquelle und der Flüssigkeitsquelle sowie Belüften zur Schaumherstellung,
**dadurch gekennzeichnet, dass**:
- die multivalente Ionenquelle zumindest eine wasserlösliche, multivalente Ionenquelle darstellt, welche aus der Gruppe von Kalziumchlorid, Kalziumbromid, Kalziumlaktat, Kalziumnitrat, Kalziumazetat, Kalziumascorbat und Kombinationen aus diesen ausgewählt ist, und
- die Schäumungsquelle und die wasserlösliche, multivalente Ionenquelle vor der Verbindung mit der Flüssigkeitsquelle zusammen als eine trockene Mischung gelagert werden.

2. Verfahren gemäß Anspruch 1, mit der gleichzeitigen Abgabe der Schäumungsquelle und der multivalenten Ionenquelle in die Flüssigkeitsquelle während der Belüftung.

3. Verfahren gemäß Anspruch 1, wobei die Belüftung aus der Gruppe von Schütteln, Vermischen, Schlagen, Rühren, Abscheren, Gasdurchblasen, Gasherstellung durch chemische/biologische Reaktion, Ultraschallbehandlung mit Gasfreisetzung sowie Kombinationen aus diesen ausgewählt wird.

4. Verfahren gemäß Anspruch 3, wobei die Belüftung gleichzeitig mit der Kombination der Schäumungsquelle, der multivalenten Ionenquelle und der Flüssigkeitsquelle stattfindet.

5. System zur Erzeugung eines Schaums mit verbesserter Qualität für ein Getränk, mit:
- mindestens einer Trockenproteinquelle;
- mindestens einer multivalenten Ionenquelle, die zur Bildung einer Trockenmischung mit der Proteinquelle kombiniert wird;
sowie
- einer Wiederherstellungsflüssigkeit,
wobei das gleichzeitige Belüften der Trockenmischung und der Wiederherstellungsflüssigkeit ein Flüssiggetränk mit dem Schaum mit verbesserter Qualität erzeugt,
**dadurch gekennzeichnet, dass** die multivalente Ionenquelle eine trockene, wasserlösliche, multivalente Ionenquelle darstellt, welche aus der Gruppe von Kalziumchlorid, Kalziumbromid, Kalziumlaktat, Kalziumnitrat, Kalziumazetat, Kalziumascorbat und Kombinationen aus diesen ausgewählt wird.

## Revendications

1. Procédé pour générer une mousse de qualité améliorée pour une boisson, le procédé comprenant les étapes suivantes :
- fournir au moins une source moussante sélectionnée à partir de sources de protéine en poudre ou à partir du groupe constitué par les protéines laitières, les protéines non-laitières, les produits d'isolats de protéines de lactosérum déminéralisés, les produits d'isolats de protéines de lactosérum faiblement minéralisés et par les combinaisons de ceux-ci ;
- fournir une source d'ions multivalents ;
- fournir une source de liquide séparée de la source d'ions multivalents ;
- combiner la source moussante, la source d'ions multivalents et la source de liquide et aérer pour produire de la mousse,
**caractérisé en ce que** :
- la source d'ions multivalents est au moins une source d'ions multivalents solubles dans l'eau sélectionnée à partir du groupe constitué par le chlorure de calcium, le bromure de calcium, le lactate de calcium, le nitrate de calcium, l'acétate de calcium, l'ascorbate de calcium et par les combinaisons de ceux-ci, et
- la source moussante et la source d'ions multivalents solubles dans l'eau sont stockées ensemble comme préparation sèche avant de combiner avec la source de liquide.

2. Le procédé selon la revendication 1,
comprenant la distribution de la source moussante et de la source d'ions multivalents simultanément dans la source de liquide pendant l'aération.

3. Le procédé selon la revendication 1,
dans lequel l'aération est sélectionnée à partir du groupe constitué par l'agitation, le mélange, le fouettage, le brassage, le cisaillement, l'insufflation de gaz, la production de gaz par réaction chimique/ biochimique, le traitement ultrasonique avec libération de gaz et les combinaisons de ceux-ci.

4. Le procédé selon la revendication 3,
dans lequel l'aération a lieu simultanément avec la combinaison de la source moussante, la source d'ions multivalents et la source de liquide.

5. Un système pour générer une mousse de qualité améliorée pour une boisson, le système comprenant :
- au moins une source de protéines sèches ;
- au moins une source d'ions multivalents combinée avec la source de protéines pour former un mélange sec ; et
- un liquide de reconstitution,
dans lequel l'aération simultanée du mélange sec et du liquide de reconstitution génère une boisson liquide ayant la mousse de qualité améliorée
**caractérisé en ce que**
la source d'ions multivalents est une source d'ions multivalents solubles dans l'eau sélectionnée à partir du groupe constitué par le chlorure de calcium, le bromure de calcium, le lactate de calcium, le nitrate de calcium, l'acétate de calcium, l'ascorbate de calcium et par les combinaisons de ceux-ci.
